# EUROPÄISCHE PATENTSCHRIFT

(11) **EP 3 727 862 B1**
(45) Veröffentlichungstag und Bekanntmachung des Hinweises auf die Patenterteilung: **01.02.2023**
(21) Anmeldenummer: 18814945.4
(22) Anmeldetag: 13.12.2018
(51) Int. Cl.: B33Y 70/00, B33Y 10/00, B29C 64/153, B29C 64/165, B22F 3/105, C08L 75/04, B29K 75/00, B29K 105/00, C08G 18/08, C08G 18/42, C08G 18/76, C09D 175/04, C08G 18/48

(54) **PULVERBASIERTES ADDITIVES FERTIGUNGSVERFAHREN**
POWDER-BASED ADDITIVE PRODUCTION METHOD
PROCÉDÉ DE FABRICATION D'ADDITIFS À BASE DE POUDRE

(30) Priorität: 20.12.2017 EP 17209193
(43) Veröffentlichungstag der Anmeldung: 28.10.2020
(73) Patentinhaber: Covestro Deutschland AG, 51373 Leverkusen (DE)
(72) Erfinder: ACHTEN, Dirk, 51375 Leverkusen (DE); BÜSGEN, Thomas, 51377 Leverkusen (DE); KESSLER, Michael, 50969 Köln (DE); REICHERT, Peter, 41541 Dormagen (DE); METTMANN, Bettina, 41540 Dormagen (DE)
(74) Vertreter: Davepon, Björn
(86) Internationale Anmeldenummer: PCT/EP2018/084662
(87) Internationale Veröffentlichungsnummer: WO 2019/121277

(56) Entgegenhaltungen:
- WO-A1-2015/109143
- WO-A1-2018/095967

## Beschreibung

Die vorliegende Erfindung betrifft ein additives Fertigungsverfahren unter Einsatz von Partikeln mit einem bestimmten thermoplastischen Polyurethan, sowie jenes Polyurethan. Sie betrifft weiterhin einen mittels solcher Partikel hergestellten Gegenstand.

Als additive Fertigungsverfahren werden solche Verfahren bezeichnet, mit denen Gegenstände schichtweise aufgebaut werden. Sie unterscheiden sich daher deutlich von anderen Verfahren zur Herstellung von Gegenständen wie Fräsen oder Bohren. Bei letztgenannten Verfahren wird ein Gegenstand so bearbeitet, dass er durch Wegnahme von Material seine Endgeometrie erhält. Additive Fertigungsverfahren nutzen unterschiedliche Materialien und Prozesstechniken, um Gegenstände schichtweise aufzubauen. Beim sogenannten Fused Deposition Modeling (FDM) beispielsweise wird ein thermoplastischer Kunststoffdraht verflüssigt und mit Hilfe einer Düse schichtweise auf einer beweglichen Bauplattform abgelegt. Beim Erstarren entsteht ein fester Gegenstand. Die Steuerung der Düse und der Bauplattform erfolgt auf der Grundlage einer CAD-Zeichnung des Gegenstands. Ist die Geometrie dieses Gegenstands komplex, zum Beispiel mit geometrischen Hinterschneidungen, müssen zusätzlich Stützmaterialien mitgedruckt und nach Fertigstellung des Gegenstands wieder entfernt werden.

Daneben existieren additive Fertigungsverfahren, welche thermoplastische Pulver nutzen, um Gegenstände schichtweise aufzubauen. Hierbei werden über einen so genannten Beschichter dünne Pulverschichten aufgetragen und anschließend mittels einer Energiequelle selektiv aufgeschmolzen. Das umgebende Pulver stützt dabei die Bauteilgeometrie. Komplexe Geometrien sind dadurch wirtschaftlicher zu fertigen als beim zuvor beschrieben FDM-Verfahren. Zudem können verschiedene Gegenstände eng gepackt im so genannten Pulverbett angeordnet beziehungsweise gefertigt werden. Aufgrund dieser Vorteile gelten pulverbasierte additive Fertigungsverfahren zu den wirtschaftlichsten additiven Herstellungsverfahren am Markt. Sie werden daher überwiegend von industriellen Nutzern verwendet. Beispiele für pulverbasierte additive Fertigungsverfahren sind das sogenannte Lasersintern (SLS, Selective Laser Sintering) oder das High Speed Sintering (HSS). Sie unterscheiden sich untereinander in der Methode, um die Energie für das selektive Aufschmelzen in den Kunststoff einzutragen. Beim Lasersinterverfahren erfolgt der Energieeintrag über einen gelenkten Laserstrahl. Beim so genannten High Speed Sintering (HSS)-Verfahren (EP 1648686) erfolgt der Energieeintrag über Infrarot (IR)-Strahler in Kombination mit einem selektiv in das Pulverbett gedruckten IR-Absorber. Das so genannte Selective Heat Sintering (SHS) nutzt die Druckeinheit eines konventionellen Thermodruckers, um thermoplastische Pulver selektiv aufzuschmelzen.

Auf Basis der Polymere, die heute in pulverbasierten additiven Fertigungsverfahren vorwiegend eingesetzt werden, entstehen Gegenstände, deren mechanische Eigenschaften sich grundlegend von der Charakteristik der Materialien unterscheiden können, wie sie in anderen kunststoffverarbeitenden Verfahren, wie dem Spritzgießen, bekannt sind. Bei der Verarbeitung durch die additiven Fertigungsverfahren verlieren die eingesetzten thermoplastischen Materialien ihre spezifische Charakteristik.

Polyamid 12 (PA12) ist der derzeit am meisten eingesetzte Werkstoff für pulverbasierte additive Fertigungsverfahren, wie z.B. dem Lasersintern. PA12 zeichnet sich durch hohe Festigkeit und Zähigkeit aus, wenn es im Spritzguss oder durch Extrusion verarbeitet wird. Ein handelsübliches PA12 zeigt beispielsweise nach dem Spritzgießen eine Bruchdehnung von mehr als 200%. PA12-Gegenstände, die mit dem Lasersinterverfahren hergestellt sind, zeigen hingegen Bruchdehnungen um 15%. Das Bauteil ist spröde und kann daher nicht mehr als typisches PA12-Bauteil angesehen werden. Gleiches gilt für Polypropylen (PP), welches als Pulver für das Lasersintern angeboten wird. Auch dieses Material versprödet und verliert damit die PP-typischen zäh-elastischen Eigenschaften. Gründe hierfür sind in der Morphologie der Polymere zu finden.

Während des Aufschmelzvorgangs mittels Laser oder IR und insbesondere beim Abkühlen entsteht eine unregelmäßige innere Struktur der so genannten teilkristallinen Polymere (beispielsweise PA12 und PP). Die innere Struktur (Morphologie) teilkristalliner Polymere ist teilweise durch hohe Ordnung gekennzeichnet. Ein gewisser Anteil der Polymerketten bildet beim Abkühlen kristalline, eng gepackte Strukturen aus. Während des Aufschmelzens und Abkühlens wachsen diese Kristallite unregelmäßig an den Grenzen der nicht komplett aufgeschmolzenen Partikel sowie an den ehemaligen Korngrenzen der Pulverpartikel und an im Pulver enthaltenen Additiven. Die Unregelmäßigkeit der so entstehenden Morphologie begünstigt unter mechanischer Belastung das Entstehen von Rissen. Die beim pulverbasierten additiven Verfahren nicht zu vermeidende Restporosität fördert das Risswachstum.

Spröde Eigenschaften der so entstandenen Bauteile sind das Resultat. Zur Erläuterung dieser Effekte wird auf European Polymer Journal 48 (2012), Seiten 1611-1621 verwiesen. Auch die im Lasersintern eingesetzten elastischen Polymere auf Basis von Block-Copolymeren zeigen ein für die eingesetzten Polymere untypisches Eigenschaftsprofil, wenn sie als Pulver mit additiven Fertigungsverfahren zu Gegenständen verarbeitet werden. Beim Lasersintern kommen heute thermoplastische Elastomere (TPE) zum Einsatz. Gegenstände, die aus den heute verfügbaren TPEs hergestellt werden, weisen nach dem Erstarren eine hohe Restporosität auf und die ursprüngliche Festigkeit des TPE-Werkstoffs ist nicht im daraus gefertigten Gegenstand messbar. In der Praxis werden diese porösen Bauteile daher nachträglich mit flüssigen, aushärtenden Polymeren infiltriert, um das erforderliche Eigenschaftsprofil einzustellen. Die Festigkeit und Dehnung bleibt trotz dieser zusätzlichen Maßnahme auf einem niedrigen Niveau. Der zusätzliche Verfahrensaufwand führt - neben den immer noch unzureichenden mechanischen Eigenschaften - zu einer schlechten Wirtschaftlichkeit dieser Materialien.

Bei Lasersinter-Verfahren unter Einsatz von Polymerpartikeln werden diese in der Regel in einem abgeschlossenen Volumen oder Kammer verarbeitet, damit die Partikel in einer erwärmten Atmosphäre verarbeitet werden können. Auf diese Weise kann die Temperaturdifferenz, die zum Sintern der Partikel durch Einwirkung des Lasers überwunden werden muss, verringert werden. Generell lässt sich feststellen, dass die thermischen Eigenschaften des Polymers die möglichen Verarbeitungstemperaturen in Lasersinter-Verfahren beeinflussen. Daher wurden im Stand der Technik vielfältige Lösungen für solche Polymere und deren Verarbeitungsverfahren vorgeschlagen.

WO 03/106146 A1 offenbart Partikel zur Verwendung beim Selektiven Laser Sintern (SLS) enthaltend einen Kern aus mindestens einem ersten Material, eine mindestens teilweise Beschichtung des Kerns mit einem zweiten Material, wobei das zweite Material eine niedrigere Erweichungstemperatur aufweist als das erste Material. Die Erweichungstemperatur des zweiten Materials beträgt weniger als circa 70 °C. Dieses Dokument offenbart weiterhin ein Verfahren zur Herstellung eines dreidimensionalen Gegenstandes mittels SLS aufweisend die Schritte: Auftragen einer Schicht aus Partikeln auf eine Zielfläche; Bestrahlen eines ausgewählten Teils der Schicht, entsprechend einem Querschnitt des Gegenstandes, mit einem Energiestrahl, so dass die Partikel im ausgewählten Teil verbunden werden; Wiederholen der Schritte des Auftragens und des Bestrahlens für eine Mehrzahl von Schichten, so dass sich die verbunden Teile der benachbarten Schichten verbinden, um den Gegenstand zu bilden. Es werden Partikel verwendet werden, die mindestens ein Material enthalten, dessen Erweichungstemperatur weniger als circa 70 °C beträgt.

WO 2015/197515 A1 beschreibt ein thermoplastisches pulverförmiges Mittel enthaltend 0,02 bis 0,5 Gew.-%, bezogen auf die Gesamtmenge an Mittel, Fließmittel und pulverförmiges thermoplastisches Polyurethan, wobei mindestens 90 Gew.-% des Mittels einen Teilchendurchmesser von kleiner 0,25 mm aufweist, wobei das thermoplastische Polyurethan erhältlich ist aus der Reaktion der Komponenten a) mindestens ein organisches Diisocyanat b) mindestens eine mit gegenüber Isocyanatgruppen reaktiven Gruppen aufweisenden Verbindung mit einem zahlenmittleren Molekulargewicht (Mₙ) von 500 g/mol bis 6000 g/mol und einer zahlenmittleren Funktionalität der Gesamtheit der Komponenten unter b) von 1,8 bis 2,5 c) mindestens ein Kettenverlängerungsmittel mit einem Molekulargewicht (Mₙ) von 60 - 450 g/mol und einer zahlenmittleren Funktionalität der Gesamtheit der Kettenverlängerungsmittel unter c) von 1,8 bis 2,5 in Gegenwart von d) gegebenenfalls Katalysatoren e) gegebenenfalls Hilfs- und/oder Zusatzmitteln f) gegebenenfalls einen oder mehrere Kettenabbrecher.

Das thermoplastische Polyurethan gemäß WO 2015/197515 A1 weist einen Schmelzbereich (DSC, Differential Scanning Calorimetry; zweite Aufheizung mit Aufheizrate 5 K/min) von 20 bis 170° C und eine Shore A Härte gemäß DIN ISO 7619-1 von 50 bis 95 auf, hat bei einer Temperatur T eine Schmelzvolumenrate (melt volume rate (MVR)) gemäß ISO 1133 von 5 bis 15 cm³/10 min und eine Änderung des MVR bei einer Erhöhung dieser Temperatur T um 20 °C von kleiner 90 cm³/10 min auf. Der Einsatzzweck ist die Herstellung von Gegenständen in pulverbasierten additiven Fertigungsverfahren.

US 2005/0080191 A1 betrifft ein Pulversystem zur Verwendung in festen Freiform-Herstellungsverfahren, umfassend wenigstens ein Polymer mit reaktiven Eigenschaften und verschmelzbaren Eigenschaften, wobei das wenigstens eine Polymer ausgewählt ist, um mit einem flüssigen Bindemittel zu reagieren und bei einer Temperatur oberhalb des Schmelzpunkts oder der Glasübergangstemperatur des wenigstens einen Polymers verschmelzbar ist. Das wenigstens eine Polymer kann wenigstens ein reaktives Polymer und wenigstens ein verschmelzbares Polymer umfassen und das wenigstens eine schmelzbare Polymer kann einen Schmelzpunkt oder eine Glasübergangstemperatur im Bereich von ca. 50 °C bis ca. 250 °C aufweisen.

WO 2015/109143 A1 offenbart Systeme und Verfahren für die Freiform-Herstellung von Festkörpern, insbesondere Lasersinterverfahren, sowie diverse mit den Verfahren erhaltene Artikel. Die Systeme und Verfahren verwenden bestimmte thermoplastische Polyurethane, welche abgeleitet sind von (a) einer Polyisocyanat-Komponente, (b) einer Polyol-Komponente und (c) einer optionalen Kettenverlängerungs-Komponente, wobei das erhaltene thermoplastische Polyurethanpolymer eine Schmelzenthalpie von wenigstens 5.5 J/g, eine Kristallisationstemperatur Tc von über 70 °C und ein Δ(Tm:Tc) von 20 Grad bis 75 Grad aufweist, wobei Δ(Tm:Tc) die Differenz zwischen Tm (Schmelztemperatur) und Tc ist.

Im Stand der Technik existiert weiterhin der Bedarf an pulverbasierten additiven Herstellungsverfahren, in denen Polymere mit hohen mechanischen Festigkeiten, einer hohen Bauteilzähigkeit und einer hohen Wärmeformbeständigkeit eingesetzt werden können und in denen die erhaltenen Bauteile homogene Materialeigenschaften aufweisen.

Erfindungsgemäß vorgeschlagen wird ein Verfahren zur Herstellung eines Gegenstandes, umfassend die Schritte:
- Auftragen einer Schicht aus Partikeln auf eine Zielfläche;
- Einwirken von Energie auf einen ausgewählten Teil der Schicht, entsprechend einem Querschnitt des Gegenstandes, in einer Kammer, so dass die Partikel im ausgewählten Teil verbunden werden;
- Wiederholen der Schritte des Auftragens und des Einwirkens von Energie für eine Mehrzahl von Schichten, so dass sich die verbundenen Teile der benachbarten Schichten verbinden, um den Gegenstand zu bilden;

wobei wenigstens ein Teil der Partikel ein schmelzbares Polymer aufweist;
wobei das schmelzbare Polymer ein thermoplastisches Polyurethanpolymer umfasst, welches
einen Schmelzbereich (DSC, Differential Scanning Calorimetry; zweite Aufheizung mit Aufheizrate 5 K/min) von 160 bis 270 °C und
eine Shore D-Härte gemäß DIN ISO 7619-1 von 50 oder mehr aufweist und welches
bei einer Temperatur Teine Schmelzvolumenrate (melt volume rate (MVR)) gemäß ISO 1133 von 5 bis 15 cm³/10 min und
eine Änderung des MVR bei einer Erhöhung dieser Temperatur T um 20 °C von > 90 cm³/10 min aufweist.

Im erfindungsgemäßen Verfahren wird ein Gegenstand schichtweise aufgebaut. Ist die Anzahl der Wiederholungen für Auftragen und Bestrahlen hinreichend gering, kann auch von einem zweidimensionalen Gegenstand gesprochen werden, der aufgebaut werden soll. Solch ein zweidimensionaler Gegenstand lässt sich auch als Beschichtung charakterisieren. Beispielsweise können zu dessen Aufbau ≥ 2 bis ≤ 20 Wiederholungen für Auftragen und Bestrahlen durchgeführt werden.

Es ist vorgesehen, dass wenigstens ein Teil der Partikel ein schmelzbares Polymer aufweist. Vorzugsweise weisen alle eingesetzten Partikel im Verfahren ein schmelzbares Polymer auf. Es ist ferner bevorzugt, dass mindestens 90 Gewichts-% der Partikel einen Teilchendurchmesser von ≤ 0.1 mm, bevorzugt ≤ 0.5 mm, besonders bevorzugt ≤ 0.2 mm aufweisen. Die Partikel mit dem schmelzbaren Polymer können beispielsweise homogen aufgebaut sein, so dass keine weiteren schmelzbaren Polymere in den Partikeln vorliegen.

Die Energiequelle zum Verbinden der Teilchen kann elektromagnetische Energie wie zum Beispiel UV- bis IR-Licht sein. Denkbar ist auch ein Elektronenstrahl. Das Verbinden der Partikel im bestrahlten Teil der Partikelschicht erfolgt üblicherweise durch (teilweises) Aufschmelzen eines (teil)kristallinen Materials und Verbinden des Materials beim Abkühlen. Es ist aber auch möglich, dass andere Gestaltumwandlungen der Partikel wie ein Glasübergang, das heißt das Erwärmen des Materials auf eine Temperatur oberhalb der Glasübergangstemperatur, eine Verbindung der Partikel untereinander bewirken.

Neben dem schmelzbaren Polymer können die Partikel noch weitere Additive wie Füllstoffe, Stabilisatoren und dergleichen, aber auch weitere Polymere, enthalten. Der Gesamtgehalt an Additiven in den Partikeln kann beispielsweise ≥ 0,1 Gewichts-% bis ≤ 50 Gewichts-%, bevorzugt ≥ 0,5 Gewichts-% bis ≤ 30 Gewichts-%, besonders bevorzugt ≥ 1 Gewichts-% bis ≤ 10 Gewichts-%, betragen.

Bei der DSC-Messung wird das Material folgendem Temperaturzyklus unterworfen: 1 Minute bei minus 60°C, danach Aufheizen auf 260°C mit 20 Kelvin/Minute, dann Abkühlen auf minus 60 °C mit 20 Kelvin/Minute, dann 1 Minute bei minus 60°C, dann Aufheizen auf 260°C mit 20 Kelvin/Minute.

Das thermoplastische Polyurethanpulver weist ein steiles Aufschmelzverhalten auf. Das Aufschmelzverhalten wird über die Änderung des MVR (melt volume rate) gemäß ISO 1133 bei 5 Minuten Vorheizzeit und 10 kg in Abhängigkeit von der Temperatur bestimmt. Als "steil" gilt ein Aufschmelzverhalten dann, wenn der MVR bei einer Ausgangstemperatur Tx einen Ausgangswert von 5 bis 15 cm³/10 min aufweist und durch Temperaturerhöhung um 20 °C auf Tx+20 um > 90 cm³/10 min steigt.

Die Temperatur T, welche als Referenzpunkt für die Bestimmung des Aufschmelzverhaltens dient, ist vorzugsweise in einem Bereich von ≥ 150 °C bis ≤ 270 °C, mehr bevorzugt ≥ 160 °C bis ≤ 265 °C und besonders bevorzugt ≥ 170 °C bis ≤ 260 °C.

Das schmelzbare Polymer weist einen Schmelzbereich von ≥ 160 °C bis ≤ 270 °C, vorzugsweise von ≥ 165 °C bis ≤ 260 °C und mehr bevorzugt von ≥ 170 °C bis ≤ 250 °C auf. Bei der DSC-Messung zur Bestimmung des Schmelzbereichs wird das Material folgendem Temperaturzyklus unterworfen: 1 Minute bei -60 °C, danach Aufheizen auf 260 °C mit 20 Kelvin/Minute, dann Abkühlen auf -60 °C mit 20 Kelvin/Minute, dann 1 Minute bei -60 °C, dann Aufheizen auf 260 °C mit 20 Kelvin/Minute.

Es ist möglich, dass das Temperaturintervall zwischen Beginn des Schmelzvorgangs und Ende des Schmelzvorgangs, wie es gemäß dem obigen DSC-Protokoll bestimmt werden kann, ≤ 50 °C, bevorzugt ≤ 30 °C und mehr bevorzugt ≤ 20 °C beträgt.

Die Wahl des thermoplastischen Polyurethanpolymers im erfindungsgemäßen Verfahren hat den Vorteil, dass hochschmelzende, scharfaufschmelzende harte TPU typischerweise eine hohe Wärmeformbeständigkeit aufweisen. Solche Eigenschaften sind besonders gefragt im Bereich technischer Artikel im Bereich Transport. Dass solche Produkte auf Basis thermoplastischer Polyurethane in einem Pulversinterprozess verarbeitbar sind, war bisher unbekannt.

Die Wärmeformbeständigkeit nach DIN EN ISO 75-1,-2,-3 Methode b liegt dabei für erfindungsmäßige Produkte bei > 100°C, bevorzugt bei > 120°C, besonders bevorzugt > 140°C und ganz besonders bevorzugt bei > 150°C.

Vorzugsweise ist das schmelzbare Polymer ein Polyurethan, das zumindest anteilsmäßig erhältlich ist aus der Reaktion von aromatischen und/oder aliphatischen Polyisocyanaten mit geeigneten (Poly)alkoholen und/oder (Poly)aminen oder deren Abmischungen. Bevorzugt werden zumindest anteilsmäßig als (Poly)alkohole solche aus der Gruppe bestehend aus: lineare Polyesterpolyole, Polyetherpolyole, Polycarbonatpolyole, Polyacrylatpolyole oder einer Kombination aus mindestens zwei hiervon eingesetzt. In einer bevorzugten Ausführungsform tragen diese (Poly)alkohole oder (Poly)amine endständige Alkohol- und/oder Amin-Funktionalitäten. In einer weiteren bevorzugten Ausführungsform haben die (Poly)alkohole und oder (Poly)amine ein Molekulargewicht von 52 bis 10000 g/mol. Bevorzugt haben diese (Poly)alkohole oder (Poly)amine als Einsatzstoffe einen Schmelzpunkt im Bereich von 5 bis 150 °C. Bevorzugte Polyisocyanate, die zumindest anteilmäßig zur Herstellung der schmelzbaren Polyurethane verwendet werden können, sind TDI, MDI, HDI, PDI, H12MDI, IPDI, TODI, XDI, NDI und Decandiisocyanat. Besonders bevorzugte Polyisocyanate sind HDI, PDI, H12MDI, MDI und TDI.

Gegebenenfalls können bei der Reaktion zum Polyurethan weiterhin Diole des Molekulargewichtsbereichs von ≥ 62 bis ≤ 600 g/mol als Kettenverlängerungsmittel eingesetzt werden.

Die Polyisocyanatkomponente kann ein symmetrisches Polyisocyanat und/oder ein nichtsymmetrisches Polyisocyanat umfassen. Beispiele für symmetrische Polyisocyanate sind 4,4'-MDI und HDI.

Bei nicht-symmetrischen Polyisocyanaten ist die sterische Umgebung einer NCO-Gruppe im Molekül von der sterischen Umgebung einer weiteren NCO Gruppe verschieden. Es reagiert dann eine Isocyanatgruppe schneller mit gegenüber Isocyanaten reaktiven Gruppen, beispielsweise OH-Gruppen, während die verbleibende Isocyanatgruppe weniger reaktiv ist. Eine Folge des nicht-symmetrischen Aufbaus des Polyisocyanats ist, dass die mit diesen Polyisocyanaten aufgebauten Polyurethane auch eine weniger gerade Struktur aufweisen.

Beispiele geeigneter nicht-symmetrischer Polyisocyanate sind ausgewählt aus der Gruppe bestehend aus: 2,2,4-Trimethyl-hexamethylendiisocyanat, Ethylethylendiisocyanat, nicht-symmetrische Isomere des Dicyclohexylmethandiisocyanat (H₁₂-MDI), nicht-symmetrische Isomere des 1,4-Diisocyanatocyclohexan, nicht-symmetrische Isomere des 1,3-Diisocyanatocyclohexan, nicht-symmetrische Isomere des 1,2-Diisocyanatocyclohexan, nicht-symmetrische Isomere des 1,3-Diisocyanatocyclopentan, nicht-symmetrische Isomere des 1,2-Diisocyanatocyclopentan, nicht-symmetrische Isomere des 1,2-Diisocyanatocyclobutan, 1-Isocyanatomethyl-3-isocyanato-1,5,5-trimethylcyclohexan (Isophorondiisocyanat, IPDI), 1-Methyl-2,4-diisocyanato-cyclohexan, 1,6-Diisocyanato-2,2,4-trimethylhexan, 1,6-Diisocyanato-2,4,4-trimethylhexan, 5-Isocyanato-1-(3-isocyanatoprop-1-yl)-1,3,3-trimethyl-cyclohexan, 5-lsocyanato-1-(4-isocyanatobut-1-yl)-1,3,3-trimethyl-cyclohexan, 1-Isocyanato-2-(3-isocyanatoprop-1-yl)-cyclohexan, 1-Isocyanato-2-(2-isocyanatoeth-1-yl)-cyclohexan, 2-Heptyl-3,4-bis(9-isocyanatononyl)-1-pentyl-cyclohexan, Norbonandiisocyanatomethyl, 2,4'-Diphenylmethandiisocyanat (MDI), 2,4- und 2,6-Toluylendiisocyanat (TDI), Derivate der aufgeführten Diisocyanate, insbesondere dimerisierte oder trimerisierte Typen, oder einer Kombination aus mindestens zwei hiervon.

Bevorzugt sind 4,4`-MDI oder eine Mischung enthaltend IPDI und HDI als Polyisocyanatkomponente.

Ausführungsformen und weitere Aspekte der Erfindung werden nachfolgend geschildert. Sie können beliebig miteinander kombiniert werden, sofern sich aus dem Kontext nicht eindeutig das Gegenteil ergibt.

In einer bevorzugten Ausführungsform des erfindungsgemäßen Verfahrens umfasst das Einwirken von Energie auf einen ausgewählten Teil der Schicht, entsprechend einem Querschnitt des Gegenstandes, so dass die Partikel im ausgewählten Teil verbunden werden, den folgenden Schritt:
- Bestrahlen eines ausgewählten Teils der Schicht, entsprechend einem Querschnitt des Gegenstandes, mit einem Energiestrahl in der Kammer, so dass die Partikel im ausgewählten Teil verbunden werden.

Diese Verfahrensform kann als selektives Sinterverfahren, insbesondere als selektives Lasersinterverfahren (SLS) angesehen werden. Der Energiestrahl zum Verbinden der Teilchen kann ein Strahl elektromagnetischer Energie wie zum Beispiel ein "Lichtstrahl" von UV- bis IR-Licht sein. Vorzugsweise ist der Energiestrahl ein Laserstrahl, besonders bevorzugt mit einer Wellenlänge zwischen 600 nm und 15 µm. Der Laser kann als Halbleiterlaser oder als Gas Laser ausgeführt sein. Denkbar ist auch ein Elektronenstrahl. Das Verbinden der Partikel im bestrahlten Teil der Partikelschicht erfolgt üblicherweise durch (teilweises) Aufschmelzen eines (teil)kristallinen Materials und Verbinden des Materials beim Abkühlen. Es ist aber auch möglich, dass andere Gestaltumwandlungen der Partikel wie ein Glasübergang, das heißt das Erwärmen des Materials auf eine Temperatur oberhalb der Glasübergangstemperatur, eine Verbindung der Partikel untereinander bewirken.

In einer weiteren bevorzugten Ausführungsform des erfindungsgemäßen Verfahrens umfasst das Einwirken von Energie auf einen ausgewählten Teil der Schicht, entsprechend einem Querschnitt des Gegenstandes, so dass die Partikel im ausgewählten Teil verbunden werden, die folgenden Schritte:
- Auftragen einer Flüssigkeit auf einen ausgewählten Teil der Schicht, entsprechend einem Querschnitt des Gegenstandes, wobei die Flüssigkeit die Absorption von Energie in den von ihr kontaktierten Bereichen der Schicht relativ zu den nicht von ihr kontaktierten Bereichen erhöht;
- Bestrahlen der Schicht in der Kammer, so dass die Partikel in von der Flüssigkeit kontaktierten Bereichen der Schicht miteinander verbunden werden und die Partikel in nicht von der Flüssigkeit kontaktierten Bereichen der Schicht nicht miteinander verbunden werden.

Bei dieser Ausfiihrungsform kann beispielsweise eine Flüssigkeit enthaltend einen IR-Absorber mittels Inkjet-Verfahren auf die Schicht aufgetragen werden. Das Bestrahlen der Schicht führt zu einer selektiven Erwärmung derjenigen Partikel, welche in Kontakt mit der Flüssigkeit samt IR-Absorber stehen. Auf diese Weise kann ein Verbinden der Partikel erreicht werden.

Die Energiequelle zum selektiven Verbinden der Partikel ist insbesondere ein UV- bis IR-Strahler. Das Verbinden der Partikel im bestrahlten Teil der Partikelschicht erfolgt üblicherweise durch (teilweises) Aufschmelzen eines (teil)kristallinen Materials und Verbinden des Materials beim Abkühlen. Es ist aber auch möglich, dass andere Gestaltumwandlungen der Partikel wie ein Glasübergang, das heißt das Erwärmen des Materials auf eine Temperatur oberhalb der Glasübergangstemperatur, eine Verbindung der Partikel untereinander bewirken.

In einer weiteren bevorzugten Ausführungsform des erfindungsgemäßen Verfahrens werden die aufgetragenen Partikel zumindest zeitweise beheizt oder gekühlt. Geeignete Kühlmethoden sind unter anderem die Kühlung einer oder mehrerer Wände einer Bauraumkammer oder das Bereitstellen von kaltem, inerten Gas innerhalb der Kammer. Es ist alternativ möglich, dass das Innere der Kammer zumindest zeitweise nicht beheizt wird. Dann wird die durch das Einwirken von Energie eingetragene thermische Energie zur Aufrechterhaltung der gewünschten Temperatur in der Kammer ausgenutzt.

In einer weiteren bevorzugten Ausführungsform des erfindungsgemäßen Verfahrens weist das thermoplastische Polyurethanpolymer eine Shore-Härte (DIN ISO 7619-1) von ≥ 50 Shore D bis ≤ 85 Shore D auf. Bevorzugt sind Shore-Härten von ≥ 60D bis ≤ 80D, mehr bevorzugt ≥ 65 D bis ≤ 75D.

In einer weiteren bevorzugten Ausführungsform des erfindungsgemäßen Verfahrens umfasst das schmelzbare Polymer neben dem Polyurethanpolymer ein weiteres Polymer, welches ausgewählt ist aus der Gruppe bestehend aus Polyester, ABS (Acrylnitrilbutadienstyrol), Polycarbonat oder einer Kombination aus mindestens zwei hiervon.

In einer weiteren bevorzugten Ausfiihrungsform des erfindungsgemäßen Verfahrens ist das schmelzbare Polymer ein Blend umfassend das Polyurethanpolymer und ABS, wobei das Polyurethanpolymer einen Schmelzpunkt (DSC, Differential Scanning Calorimetry; zweite Aufheizung mit Aufheizrate 20 K/min) von ≥ 160 °C aufweist und der Anteil des ABS in dem Blend ≥ 1 Gewichts-% bis ≤ 40 Gewichts-% (vorzugsweise ≥ 2 Gewichts-% bis ≤ 20 Gewichts-%, mehr bevorzugt ≥ 3 Gewichts-% bis ≤ 15 Gewichts-%), bezogen auf das Gesamtgewicht des Blends, beträgt.

In einer weiteren bevorzugten Ausführungsform des erfindungsgemäßen Verfahrens ist das schmelzbare Polymer ein Blend umfassend das Polyurethanpolymer und einen Polyester , wobei das Polyurethanpolymer einen Schmelzpunkt (DSC, Differential Scanning Calorimetry; zweite Aufheizung mit Aufheizrate 20 K/min) von ≥ 160 °C aufweist und der Anteil des Polyesters in dem Blend ≥ 1 Gewichts-% bis ≤ 40 Gewichts-% (vorzugsweise ≥ 2 Gewichts-% bis ≤ 20 Gewichts-%, mehr bevorzugt ≥ 3 Gewichts-% bis ≤ 15 Gewichts-%), bezogen auf das Gesamtgewicht des Blends, beträgt.

In einer weiteren bevorzugten Ausfiihrungsform des erfindungsgemäßen Verfahrens ist das schmelzbare Polymer ein Blend umfassend das Polyurethanpolymer und ein Polycarbonat auf der Basis von Bisphenol A (2,2-Bis(4-hydroxyphenyl)-propan) und/oder Bisphenol TMC (1,1-Bis(4-hydroxyphenyl)-3,3,5-trimethylcyclohexan), wobei das Polyurethanpolymer einen Schmelzpunkt (DSC, Differential Scanning Calorimetry; zweite Aufheizung mit Aufheizrate 20 K/min) von ≥ 160 °C aufweist und der Anteil des Polycarbonats in dem Blend ≥ 1 Gewichts-% bis ≤ 40 Gewichts-% (vorzugsweise ≥ 2 Gewichts-% bis ≤ 20 Gewichts-%, mehr bevorzugt > 3 Gewichts-% bis ≤ 15 Gewichts-%), bezogen auf das Gesamtgewicht des Blends, beträgt.

In einer weiteren bevorzugten Ausführungsform des erfindungsgemäßen Verfahrens weist wenigstens ein Teil der Partikel das schmelzbare Polymer sowie ein weiteres Polymer und/oder anorganische Partikel auf. Dann werden sogenannte Co-Pulver eingesetzt. Das weitere Polymer kann mit dem schmelzbaren Polymer eine oder mehrere Phasen bilden. Es kann durch Einwirkung des Energiestrahls in der Kammer ganz oder teilweise aufgeschmolzen werden oder auch im festen Zustand verbleiben. Beispiele für anorganische Partikel sind Füllstoffe wie Kieselsäure, Kalksteinmehl, natürliche, gemahlene Kreiden (Calciumcarbonate oder Calcium-Magnesiumcarbonate), Schwerspat, Talk, Glimmer, Tone oder gegebenenfalls auch Ruß. Der Gesamtanteil des weiteren Polymers und/oder der anorganischen Partikel kann beispielsweise ≥ 5 Gewichts-% bis ≤ 50 Gewichts-%, bezogen auf das Gesamtgewicht der Partikel, betragen.

In einer weiteren bevorzugten Ausführungsform des erfindungsgemäßen Verfahrens wird der gebildete Gegenstand einer Nachbehandlung unterzogen, die ausgewählt ist aus der Gruppe bestehend aus: mechanisches Glätten der Oberfläche, gezieltes lokales Erwärmen, Erwärmen des gesamten Gegenstands, gezieltes lokales Abkühlen, Abkühlen des gesamten Gegenstands, Kontaktieren des Gegenstands mit Wasserdampf, Kontaktieren des Gegenstands mit dem Dampf eines organischen Lösungsmittels, Bestrahlen des Gegenstands mit elektromagnetischer Strahlung, Immersion des Gegenstands in ein Flüssigkeitsbad oder einer Kombination aus mindestens zwei hiervon. Solche Nachbehandlungen dienen vor allem der Verbesserung der Oberflächengüte des Gegenstands.

In einer weiteren bevorzugten Ausführungsform des erfindungsgemäßen Verfahrens sind die Partikel nach dem Schritt des Auftragens einer Schicht der Partikel auf die Zielfläche wenigstens teilweise in einer flüssigen Phase suspendiert. Die flüssige Phase kann in einem späteren Stadium des Verfahrens entfernt werden. Nach dem Auftragen einer Partikelschicht kann so gezielt ein Bereich der Partikelschicht mit einer Tinte versehen werden, welche in Kombination mit dem Energiestrahl zu einer Verbindung der Partikel untereinander führt. Somit werden Elemente des High Speed Sintering (HSS)-Verfahrens übernommen.

In einer weiteren bevorzugten Ausführungsform des erfindungsgemäßen Verfahrens ist derjenige Teil der Partikel, welche ein schmelzbares Polymer aufweisen, derart ausgewählt, dass die Partikel nach einer Lagerung bei 150 °C für > 2h bevorzugt > 4h und besonders bevorzugt > 8h unter einer Stickstoffatmosphäre ihre ursprüngliche Rieselfähigkeit beibehalten. Somit verklumpen diese Partikel nicht, wenn der Bauraum für das additive Fertigungsverfahren beheizt wird.

Bevorzugt weist das Polyurethanpolymer bei 140 °C ein Speichermodul E' (dynamischmechanische Analyse gemäß ISO 6721-10) von ≥ 10⁷ Pa auf. Vorzugsweise weist das Polyurethanpolymer bei 150 °C ein Speichermodul E' von ≥ 10⁷ Pa auf, mehr bevorzugt bei 160 °C ein Speichermodul E' von ≥ 10⁷ Pa.

In einer weiteren bevorzugten Ausführungsform des erfindungsgemäßen Verfahrens weist derjenige Teil der Partikel, welche ein schmelzbares Polymer aufweisen, nach Lagerung bei 140 °C (vorzugsweise 150 °C) für 8 Stunden unter einer Stickstoffatmosphäre eine Farbänderung (EN ISO 11664-4) von ≤ 10 ΔE auf.

In einer weiteren bevorzugten Ausfiihrungsform des erfindungsgemäßen Verfahrens weist das Polyurethanpolymer nach Lagerung bei 150 °C für 8 Stunden unter einer Stickstoffatmosphäre eine Viskositätsveränderung in der Schmelze bei einer Temperatur T = 10°C > T_{off} Schmelzpunkt von < +- 50%.

Ein weiterer Gegenstand der Erfindung betrifft ein thermoplastisches pulverförmiges Mittel enthaltend pulverförmiges thermoplastisches Polyurethan, wobei das thermoplastische Polyurethan erhältlich ist aus der Reaktion der Komponenten
a) mindestens ein organisches Diisocyanat,
b) mindestens eine mit gegenüber Isocyanatgruppen reaktiven Gruppen aufweisenden Verbindung mit einem zahlenmittleren Molekulargewicht (Mn) von 500 g/mol bis 6000 g/mol und einer zahlenmittleren Funktionalität der Gesamtheit der Komponenten unter b) von 1,8 bis 2,5,
c) mindestens ein Kettenverlängerungsmittel mit einem Molekulargewicht (Mn) von 60 bis 450 g/mol und einer zahlenmittleren Funktionalität der Gesamtheit der Kettenverlängerungsmittel unter c) von 1,8 bis 2,5,
in Gegenwart von
d) gegebenenfalls Katalysatoren,
e) gegebenenfalls Hilfs- und/oder Zusatzmitteln,
f) gegebenenfalls einen oder mehrere Kettenabbrecher,

wobei das thermoplastische Polyurethan einen Schmelzbereich (DSC, Differential Scanning Calorimetry; zweite Aufheizung mit Aufheizrate 5 K/min) von 160 bis 270 °C und eine Shore D-Härte gemäß DIN ISO 7619-1 von 50 oder mehr aufweist und welches bei einer Temperatur T eine Schmelzvolumenrate (melt volume rate (MVR)) gemäß ISO 1133 von 5 bis 15 cm³/10 min und eine Änderung des MVR bei einer Erhöhung dieser Temperatur T um 20 °C von > 90 cm³/10 min aufweist,
zur Herstellung von Gegenständen in pulverbasierten additiven Fertigungsverfahren, insbesondere dem zuvor beschriebenen Verfahren.

Bevorzugt weist das thermoplastische pulverförmige Mittel 0,02 bis 0,5 Gew.-%, mehr bevorzugt 0,05 bis 0,4 Gew.-%, besonders bevorzugt 0,1 bis 0,3 Gew.-% Fließmittel, bezogen auf die Gesamtmenge an thermoplastischem pulverförmigen Mittel auf. Üblicherweise ist das Fließmittel eine anorganische gepulverte Substanz, wobei mindestens 90 Gew.-% des Fließmittels einen Teilchendurchmesser von kleiner 25 µm (gemessen mittels Laserbeugung) haben und die Substanz vorzugsweise ausgewählt ist aus der Gruppe bestehend aus hydratisierten Siliciumdioxiden, hydrophobierten pyrogenen Kieselsäuren, amorphem Aluminiumoxid, glasartigen Siliciumdioxiden, glasartigen Phosphaten, glasartigen Boraten, glasartigen Oxiden, Titandioxid, Talk, Glimmer, pyrogenen Siliciumdioxiden, Kaolin, Attapulgit, Calciumsilicaten, Aluminiumoxid und Magnesiumsilicaten.

Weiterhin bevorzugt weisen mindestens 90 Gew.-% des Mittels einen Teilchendurchmesser von ≤ 0,25 mm, bevorzugt von ≤ 0,2 mm, mehr bevorzugt von ≤ 0,15 mm auf, gemessen mittels Laserbeugung.

Die Komponenten, wie die Komponenten d) bis f) können aus sämtlichen dem Fachmann im Zusammenhang mit thermoplastischen Polyurethanen gängige Komponenten ausgewählt sein. Bevorzugt sind diese Komponenten solche, wie in WO 2015/197515 A1 hierfür beschrieben und werden auch bevorzugt in Mengen wie dort beschrieben zur Herstellung des thermoplastischen Polyurethans verwendet.

Das thermoplastische Polyurethan enthaltend in dem thermoplastischen pulverförmigen Mittel kann bevorzugt sämtliche Eigenschaften und Bestandteile aufweisen, wie zuvor für das thermoplastische Polyurethan in Zusammenhang mit dem erfindungsgemäßen Verfahren beschrieben.

Die Erfindung betrifft desweiteren einen durch das erfindungsgemäße Verfahren oder mittels des erfindungsgemäßen Mittels hergestellten Gegenstand.

In einer weiteren bevorzugten Ausführungsform des Gegenstands weist im Gegenstand vorliegendes gesintertes thermoplastisches Polyurethan einen tan delta-Wert (nach dynamischmechanische Analyse) auf, welcher im Temperaturbereich zwischen 0 °C und 100 °C um ≤ 0,2 (bevorzugt ≤ 0,15 und mehr bevorzugt ≤ 0,1) schwankt.

### Beispiele

Die vorliegende Erfindung wird anhand der nachfolgenden Beispiele näher erläutert, ohne jedoch darauf beschränkt zu sein. Gewichtsprozentangaben beziehen sich auf die eingesetzte Gesamtmenge an reaktiven organischen Bestandteilen (Alkohole, Amine, Wasser, Isocyanate).

Erfindungsgemäß verwendbare TPU und TPU für Vergleichsbeispiele wurden nach zwei gängigen Verfahrensmethoden hergestellt: dem Präpolymerverfahren und dem One-Shot/Statikmischer-Verfahren.

Beim Präpolymerverfahren wird das Polyol oder Polyolgemisch auf 180 bis 210 °C vorgeheizt, mit einem Teil des Isocyanats vorgelegt und bei Temperaturen von 200 bis 240 °C umgesetzt. Die Drehzahl des hierbei eingesetzten Zweischneckenextruders beträgt ca. 270 bis 290 U/min. Durch diese vorgelagerte Teilreaktion erhält man ein lineares, leicht vorverlängertes Präpolymer, das im weiteren Verlauf des Extruders mit Restisocyanat und Kettenverlängerer abreagiert. Dieses Verfahren ist beispielhaft in EP-A 747 409 beschrieben.

Beim One-Shot/Statikmischer Verfahren werden alle Comonomere über einen Statikmischer oder ein anderes geeignetes Mischaggregat bei hohen Temperaturen (über 250 °C) innerhalb kurzer Zeit (unter 20 s) homogenisiert und anschließend über einen Zweischneckenextruder bei Temperaturen von 90 bis 240°C und einer Drehzahl von 260-280 U/min ausreagiert und ausgetragen. Dieses Verfahren ist beispielhaft in der Anmeldung DE 19924089 beschrieben.

Das thermisch mechanische Verhalten der erhaltenen TPU wurde an spritzgegossenen Probenplatten mit den Maßen 50 mm^{∗}10 mm^{∗}1 mm ermittelt. Die Messparameter für die DMA-Messungen waren eine Frequenz von 1 Hz und einer Aufheizrate von 2 °C/min über ein Temperaturintervall von -150 °C bis 250 °C angelehnt an DIN-EN-ISO 6721-4.

### Beispiel 1:

Das TPU (thermoplastisches Polyurethan) wurde aus 1 Mol Polyetherpolyolgemisch (DuPont) mit einem zahlenmittleren Molekulargewicht von 1500 g/mol auf Basis von Polytetramethylenetherglykol sowie 8,51 Mol 1,4-Butandiol; 9,51 Mol technischem 4,4'-Diphenylmethandiisocyanat (MDI) mit >98 Gew.-% 4,4'-MDI; 0,5 Gew.-% Irganox^{®} 1010 (Pentaerythritoltetrakis(3-(3,5-di-tert-butyl-4-hydroxyphenyl)propionat) von BASF SE) sowie 0,1 Gew.-% Loxamid 3324 (N,N'-Ethylen-bis-stearylamid) nach dem Prepolymerverfahren hergestellt.

Es wurde ein Polyurethan mit einer Glasübergangstemperatur (DMA-Messung, Maximum des Verlustmoduls E") von -55 °C, einer Shore D-Härte (ISO 868) eines spritzgegossenen Probenkörpers von 70 bis 74 und einem Schmelzbereich (ISO 11357-3) von 170 °C bis 250 °C erhalten.

### Beispiel 2:

Das TPU (thermoplastisches Polyurethan) wurde aus 1 Mol Polyesterdiol (Covestro) mit einem zahlenmittleren Molekulargewicht von ca. 2000 g/mol auf Basis von Adipinsäure, Hexandiol und Neopentylglycol sowie 4,85 Mol 2,2'-(1,4-Phenylendioxy)diethanol, 5,85 Mol technischem 4,4'-Diphenylmethandiisocyanat (MDI) mit >98 Gew.-% 4,4'-MDI, 0,03 Gew.-% Irganox^{®} 1010 (Pentaerythritoltetrakis(3-(3,5-di-tert-butyl-4-hydroxyphenyl)propionat) von BASF SE) und 100 ppm Zinndioctoat sowie 0,5 Gew.-% Loxamid 3324 (N,N'-Ethylen-bis-stearylamid) nach dem Prepolymerverfahren hergestellt.

Es wurde ein Polyurethan mit einer Glasübergangstemperatur (DMA-Messung, Maximum des Verlustmoduls E") von -13 °C °C, einer Shore D-Härte (ISO 868) eines spritzgegossenen Probenkörpers von 60 bis 64 und einem Schmelzbereich (ISO 11357-3) von 195 °C bis 258 °C erhalten.

### Vergleichsbeispiel V1:

Das TPU (thermoplastisches Polyurethan) wurde aus 1 Mol Polyesterdiol (Covestro) mit einem zahlenmittleren Molekulargewicht von ca. 900 g/mol auf Basis von ca. 56,7 Gew.-% Adipinsäure und ca. 43,3 Gew.-% 1,4-Butandiol sowie ca. 1,45 Mol 1,4-Butan-diol, ca. 0,22 Mol 1,6-Hexandiol, ca. 2,67 Mol technischem 4,4'-Diphenylmethandiisocyanat (MDI) mit >98 Gew.-% 4,4'-MDI, 0,05 Gew.-% Irganox^{®} 1010 (Pentaerythritoltetrakis(3-(3,5-di-tert-butyl-4-hydroxyphenyl)propionat) von BASF SE), 1,1 Gew.-% Licowax^{®} E (Montansäureester von Clariant) und 250 ppm Zinndioctoat nach dem Statikmischer-Extruder-Verfahren (hergestellt.

Es wurde ein Polyurethan mit einer Glasübergangstemperatur (DMA-Messung, Maximum des Verlustmoduls E") von -24 °C, einer Shore A-Härte (ISO 868) eines spritzgegossenen Probenkörpers von 90 bis 94 und einem Schmelzbereich (ISO 11357-3) von 63 °C bis 175 °C erhalten.

### Vergleichsbeispiel V2:

Das TPU wurde aus 1 Mol Polyesterdiol (Covestro) mit einem zahlenmittleren Molekulargewicht von ca. 900 g/mol auf Basis von ca. 56,7 Gew.-% Adipinsäure und ca. 43,3 Gew.-% 1,4-Butandiol sowie ca. 1,77 Mol 1,4-Butandiol, ca. 2,77 Mol technischem 4,4'-Diphenylmethandiisocyanat (MDI) mit >98 Gew.-% 4,4'-MDI, 0,05 Gew.-% Irganox^{®} 1010 (Pentaerythritoltetrakis(3-(3,5-di-tert-butyl-4-hydroxyphenyl)propionat) von BASF SE, 0,2 Gew.-% Octanol und 200 ppm Zinndioctoat nach dem Statikmischer-Extruder-Verfahren (hergestellt.

Es wurde ein Polyurethan mit einer Glasübergangstemperatur (DMA-Messung, Maximum des Verlustmoduls E") von -18 °C, einer Shore A-Härte (ISO 868) eines spritzgegossenen Probenkörpers von 90 bis 94 und einem Schmelzbereich (ISO 11357) von 79 °C bis 170 °C erhalten.

Die nachfolgende Tabelle fasst die erhaltenen Messwerte zusammen:

| Beispiel | Tg [°C] | Shore A | Shore D | Schmelzbereich [°C] | T_{MVR} [°C] | MVR_{T+20°C} [cm³/10 min] |
|---|---|---|---|---|---|---|
| 1 | 55 | | 70-74 | 170-250 | 220 | >100 |
| 2 | -13 | | 60-64 | 195-258 | 237 | >100 |
| V1 | -24 | 90-94 | | 63-175 | 160 | 69 |
| V2 | -18 | 90-94 | | 79-170 | 170 | 48 |

T_{MVR} [°C] bezeichnet die Temperatur, bei der die Schmelzvolumenrate gemäß ISO 1133 in einem Bereich von 5 bis 15 cm³/10 min liegt. MVR_{T+20°C} [cm³/10 min] bezeichnet die Schmelzvolumenrate bei einer Erhöhung dieser Temperatur T um 20 °C.

Den unter Beispiel 1 und 2 sowie Vergleichsbeispielen V1 und V2 hergestellten TPU wurden 0,2 Gew.-%, bezogen auf TPU, hydrophobierter pyrogener Kieselsäure als Fließmittel (Aerosil^{®} R972 von Evonik) zugegeben und die Mischung mechanisch unter Tiefkälte (kryogener Zerkleinerung) in einer Stiftmühle zu Pulver verarbeitet und anschließend durch eine Siebmaschine klassifiziert. 90 Gew.-% des Mittels hatten einen Teilchendurchmesser von kleiner 140 µm (gemessen mittels Laserbeugung (HELOS - Partikelgrößenanalyse)).

Anschließend wurden S2-Prüfstäbe in einem Pulversinterverfahren hergestellt.

Die zuvor erhaltenen TPU-Pulvermaterialien wurden vor jedem Sinterversuch gesiebt und unter Schutzgasatmosphäre (Stickstoff) in das Vorlagebehältnis des verwendeten 3D-Pulverdruckers gegeben. Während des gesamten Druckvorgangs waren Vorlage, Bauraum und Überlauf unter Schutzgas. Der Bauraum wurde auf die Bauraumtemperatur (siehe Tabelle) geheizt und ca. 15 min vor Beginn des Bauauftrages getempert. Die Sinterparameter sind ebenfalls der nachfolgenden Tabelle zu entnehmen. Grundsätzlich wurde jede zu versinternde Stelle zweimal mit dem Laserstrahl abgefahren, um eine bessere Lagenhaftung zu erreichen. Nach Beendigung des Bauauftrages wurde der Bauraum langsam unter Schutzgas abkühlen gelassen und der Pulverkuchen aus dem Bauraum entfernt. Die gesinterten Teile wurden erst grob mechanisch, dann mit Druckluft von überschüssigem Pulver befreit, bevor sie mechanisch/thermischen Untersuchungen unterzogen wurden.

| Beispiel | Bauraumtemp. [°C] | Laserleistung [W] | Schichtdicke [mm] | Anzahl der Sintervorgänge pro Schicht | Ergebnis |
|---|---|---|---|---|---|
| 1 | 170 | 64 | 0,15 | 2 | Bauteil nach Vorgabe |
| 2 | 170 | 64 | 0,15 | 2 | Bauteil nach Vorgabe |
| V1 | 160 | 56 | 0,15 | 2 | Vollständig versintertes Pulver im Bauraum |
| V2 | 160 | 54 | 0,15 | 2 | Vollständig versintertes Pulver im Bauraum |

Es lässt sich als Ergebnis feststellen, dass die in Übereinstimmung mit dem erfindungsgemäßen Verfahren eingesetzten TPU-Materialien erfolgreich in einem 3D-Pulverdrucker verarbeitet werden konnten, während die Materialien der Vergleichsbeispiele unter den erfindungsgemäßen Bedingungen ungeeignet waren.

## Patentansprüche

1. Ein Verfahren zur Herstellung eines Gegenstandes, umfassend die Schritte:
- Auftragen einer Schicht aus Partikeln auf eine Zielfläche;
- Einwirken von Energie auf einen ausgewählten Teil der Schicht, entsprechend einem Querschnitt des Gegenstandes, in einer Kammer, so dass die Partikel im ausgewählten Teil verbunden werden;
- Wiederholen der Schritte des Auftragens und des Einwirkens von Energie für eine Mehrzahl von Schichten, so dass sich die verbundenen Teile der benachbarten Schichten verbinden, um den Gegenstand zu bilden;
wobei wenigstens ein Teil der Partikel ein schmelzbares Polymer aufweist;
**dadurch gekennzeichnet, dass**
das schmelzbare Polymer ein thermoplastisches Polyurethanpolymer umfasst, welches
einen Schmelzbereich (DSC, Differential Scanning Calorimetry; zweite Aufheizung mit Aufheizrate 20 K/min) von 160 bis 270 °C und
eine Shore D-Härte gemäß DIN ISO 7619-1 von 50 oder mehr aufweist und welches
bei einer Temperatur Teine Schmelzvolumenrate (melt volume rate (MVR)) gemäß ISO 1133 von 5 bis 15 cm³/10 min und
eine Änderung des MVR bei einer Erhöhung dieser Temperatur T um 20 °C von > 90 cm³/10 min aufweist.

2. Das Verfahren gemäß Anspruch 1, **dadurch gekennzeichnet, dass** das Einwirken von Energie auf einen ausgewählten Teil der Schicht, entsprechend einem Querschnitt des Gegenstandes, so dass die Partikel im ausgewählten Teil verbunden werden, den folgenden Schritt umfasst:
- Bestrahlen eines ausgewählten Teils der Schicht, entsprechend einem Querschnitt des Gegenstandes, mit einem Energiestrahl, so dass die Partikel im ausgewählten Teil verbunden werden.

3. Das Verfahren gemäß Anspruch 1, **dadurch gekennzeichnet, dass** das Einwirken von Energie auf einen ausgewählten Teil der Schicht, entsprechend einem Querschnitt des Gegenstandes, so dass die Partikel im ausgewählten Teil verbunden werden, die folgenden Schritte umfasst:
- Auftragen einer Flüssigkeit auf einen ausgewählten Teil der Schicht, entsprechend einem Querschnitt des Gegenstandes, wobei die Flüssigkeit die Absorption von Energie in den von ihr kontaktierten Bereichen der Schicht relativ zu den nicht von ihr kontaktierten Bereichen erhöht;
- Bestrahlen der Schicht, so dass die Partikel in von der Flüssigkeit kontaktierten Bereichen der Schicht miteinander verbunden werden und die Partikel in nicht von der Flüssigkeit kontaktierten Bereichen der Schicht nicht miteinander verbunden werden.

4. Das Verfahren gemäß einem der vorhergehenden Ansprüche, **dadurch gekennzeichnet, dass** die aufgetragenen Partikel zumindest zeitweise beheizt oder gekühlt werden.

5. Das Verfahren gemäß einem der vorhergehenden Ansprüche, **dadurch gekennzeichnet, dass** das thermoplastische Polyurethanpolymer eine Shore-Härte (DIN ISO 7619-1) von ≥ 50 Shore D bis ≤ 85 Shore D aufweist.

6. Das Verfahren gemäß einem der vorhergehenden Ansprüche, **dadurch gekennzeichnet, dass** das schmelzbare Polymer neben dem Polyurethanpolymer ein weiteres Polymer umfasst, welches ausgewählt ist aus der Gruppe bestehend aus Polyester, ABS, Polycarbonat oder einer Kombination aus mindestens zwei hiervon.

7. Das Verfahren gemäß Anspruch 6, **dadurch gekennzeichnet, dass** das schmelzbare Polymer ein Blend umfassend das Polyurethanpolymer und ABS ist, wobei das Polyurethanpolymer einen Schmelzpunkt (DSC, Differential Scanning Calorimetry; zweite Aufheizung mit Aufheizrate 20 K/min) von ≥ 160 °C aufweist und der Anteil des ABS in dem Blend ≥ 1 Gewichts-% bis ≤ 40 Gewichts-%, bezogen auf das Gesamtgewicht des Blends, beträgt.

8. Das Verfahren gemäß Anspruch 6, **dadurch gekennzeichnet, dass** das schmelzbare Polymer ein Blend umfassend das Polyurethanpolymer und einen Polyester ist, wobei das Polyurethanpolymer einen Schmelzpunkt (DSC, Differential Scanning Calorimetry; zweite Aufheizung mit Aufheizrate 20 K/min) von ≥ 160 °C aufweist und der Anteil des Polyesters in dem Blend ≥ 1 Gewichts-% bis ≤ 40 Gewichts-%, bezogen auf das Gesamtgewicht des Blends, beträgt.

9. Das Verfahren gemäß Anspruch 6, **dadurch gekennzeichnet, dass** das schmelzbare Polymer ein Blend umfassend das Polyurethanpolymer und einem Polycarbonat auf der Basis von Bisphenol A und/oder Bisphenol TMC ist, wobei das Polyurethanpolymer einen Schmelzpunkt (DSC, Differential Scanning Calorimetry; zweite Aufheizung mit Aufheizrate 20 K/min) von ≥ 160 °C aufweist und der Anteil des Polycarbonats in dem Blend ≥ 1 Gewichts-% bis ≤ 40 Gewichts-%, bezogen auf das Gesamtgewicht des Blends, beträgt.

10. Das Verfahren gemäß einem der vorhergehenden Ansprüche, **dadurch gekennzeichnet, dass** wenigstens ein Teil der Partikel das schmelzbare Polymer sowie ein weiteres Polymer und/oder anorganische Partikel aufweist.

11. Das Verfahren gemäß einem der vorhergehenden Ansprüche, **dadurch gekennzeichnet, dass** der gebildete Gegenstand einer Nachbehandlung unterzogen wird, die ausgewählt ist aus der Gruppe bestehend aus: mechanisches Glätten der Oberfläche, gezieltes lokales Erwärmen, Erwärmen des gesamten Gegenstands, gezieltes lokales Abkühlen, Abkühlen des gesamten Gegenstands, Kontaktieren des Gegenstands mit Wasserdampf, Kontaktieren des Gegenstands mit dem Dampf eines organischen Lösungsmittels, Bestrahlen des Gegenstands mit elektromagnetischer Strahlung, Immersion des Gegenstands in ein Flüssigkeitsbad oder einer Kombination aus mindestens zwei hiervon.

12. Das Verfahren gemäß einem der vorhergehenden Ansprüche, **dadurch gekennzeichnet, dass** die Partikel nach dem Schritt des Auftragens einer Schicht der Partikel auf die Zielfläche wenigstens teilweise in einer flüssigen Phase suspendiert sind.

13. Das Verfahren gemäß einem der vorhergehenden Ansprüche, **dadurch gekennzeichnet, dass** derjenige Teil der Partikel, welche ein schmelzbares Polymer aufweisen, derart ausgewählt ist, dass die Partikel nach einer Lagerung bei 150 °C für 8 Stunden unter einer Stickstoffatmosphäre ihre ursprüngliche Rieselfähigkeit beibehalten.

14. Thermoplastisches pulverförmiges Mittel enthaltend pulverförmiges thermoplastisches Polyurethan, wobei das thermoplastische Polyurethan erhältlich ist aus der Reaktion der Komponenten
a) mindestens ein organisches Diisocyanat,
b) mindestens eine mit gegenüber Isocyanatgruppen reaktiven Gruppen aufweisenden Verbindung mit einem zahlenmittleren Molekulargewicht (Mn) von 500 g/mol bis 6000 g/mol und einer zahlenmittleren Funktionalität der Gesamtheit der Komponenten unter b) von 1,8 bis 2,5,
c) mindestens ein Kettenverlängerungsmittel mit einem Molekulargewicht (Mn) von 60 bis 450 g/mol und einer zahlenmittleren Funktionalität der Gesamtheit der Kettenverlängerungsmittel unter c) von 1,8 bis 2,5,
in Gegenwart von
d) gegebenenfalls Katalysatoren,
e) gegebenenfalls Hilfs- und/oder Zusatzmitteln,
f) gegebenenfalls einen oder mehrere Kettenabbrecher,
**dadurch gekennzeichnet, dass** das thermoplastische Polyurethan einen Schmelzbereich (DSC, Differential Scanning Calorimetry; zweite Aufheizung mit Aufheizrate 5 K/min) von 160 bis 270 °C und eine Shore D-Härte gemäß DIN ISO 7619-1 von 50 oder mehr aufweist und welches bei einer Temperatur T eine Schmelzvolumenrate (melt volume rate (MVR)) gemäß ISO 1133 von 5 bis 15 cm³/10 min und eine Änderung des MVR bei einer Erhöhung dieser Temperatur T um 20 °C von > 90 cm³/10 min aufweist,
zur Herstellung von Gegenständen in pulverbasierten additiven Fertigungsverfahren, insbesondere dem Verfahren gemäß einem der Ansprüche 1 bis 13.

15. Ein Gegenstand, hergestellt durch ein Verfahren gemäß einem der Ansprüche 1 bis 13 oder mit Hilfe des Mittels gemäß Anspruch 14.

## Claims

1. A method for producing an article, comprising the steps of:
- applying a layer of particles to a target surface;
- introducing energy into a selected portion of the layer corresponding to a cross section of the article in a chamber to bond the particles in the selected portion;
- repeating the steps of applying and introducing energy for a multitude of layers to bond the bonded portions of the adjacent layers in order to form the article;
where at least some of the particles include a fusible polymer;
**characterized in that**
the fusible polymer comprises a thermoplastic polyurethane polymer having
a melting range (DSC, differential scanning calorimetry; second heating run at a heating rate of 20 K/min) of 160°C to 270°C and
a Shore D hardness to DIN ISO 7619-1 of 50 or more and
a melt volume flow rate (MVR) at a temperature T according to ISO 1133 of 5 to 15 cm³/10 min and
a change in the MVR in the event of an increase of this temperature T by 20°C of > 90 cm³/10 min.

2. The method as claimed in claim 1, **characterized in that** the introducing of energy into a selected portion of the layer corresponding to a cross section of the article to bond the particles in the selected portion comprises the following step:
- irradiating a selected portion of the layer corresponding to a cross section of the article with an energy beam to bond the particles in the selected portion.

3. The method as claimed in claim 1, **characterized in that** the introducing of energy into a selected portion of the layer corresponding to a cross section of the article to bond the particles in the selected portion comprises the following steps:
- applying a liquid to a selected portion of the layer corresponding to a cross section of the article, where said liquid increases the absorption of energy in the regions of the layer with which it comes into contact relative to the regions with which it does not come into contact;
- irradiating the layer so that the particles in regions of the layer contacted with the liquid are bonded to one another and the particles in regions of the layer not contacted by the liquid are not bonded to one another.

4. The method as claimed in any of the preceding claims, **characterized in that** the particles applied are at least intermittently heated or cooled.

5. The method as claimed in any of the preceding claims, **characterized in that** the thermoplastic polyurethane polymer has a Shore hardness (DIN ISO 7619-1) of ≥ 50 Shore D to ≤ 85 Shore D.

6. The method as claimed in any of the preceding claims, **characterized in that** the fusible polymer, as well as the polyurethane polymer, comprises a further polymer selected from the group consisting of polyester, ABS, polycarbonate or a combination of at least two of these.

7. The method as claimed in claim 6, **characterized in that** the fusible polymer is a blend comprising the polyurethane polymer and ABS, where the polyurethane polymer has a melting point (DSC, differential scanning calorimetry; second heating run at heating rate 20 K/min) of ≥ 160°C and the proportion of the ABS in the blend is ≥ 1% by weight to ≤ 40% by weight, based on the total weight of the blend.

8. The method as claimed in claim 6, **characterized in that** the fusible polymer is a blend comprising the polyurethane polymer and a polyester, where the polyurethane polymer has a melting point (DSC, differential scanning calorimetry; second heating run at heating rate 20 K/min) of ≥ 160°C and the proportion of polyester in the blend is ≥ 1% by weight to ≤ 40% by weight, based on the total weight of the blend.

9. The method as claimed in claim 6, **characterized in that** the fusible polymer is a blend comprising the polyurethane polymer and a polycarbonate based on bisphenol A and/or bisphenol TMC, where the polyurethane polymer has a melting point (DSC, differential scanning calorimetry; second heating run at heating rate 20 K/min) of ≥ 160°C and the proportion of polycarbonate in the blend is ≥ 1% by weight to ≤ 40% by weight, based on the total weight of the blend.

10. The method as claimed in any of the preceding claims, **characterized in that** at least some of the particles include the fusible polymer and a further polymer and/or inorganic particles.

11. The method as claimed in any of the preceding claims, **characterized in that** the article formed is subjected to an aftertreatment selected from the group consisting of: mechanical smoothing of the surface, controlled local heating, heating of the entire article, controlled local cooling, cooling of the entire article, contacting of the article with steam, contacting of the article with the vapor of an organic solvent, irradiating the article with electromagnetic radiation, immersing the article into a liquid bath, or a combination of at least two of these.

12. The method as claimed in any of the preceding claims, **characterized in that** the particles, after the step of applying a layer of particles to the target surface, are at least partly suspended in a liquid phase.

13. The method as claimed in any of the preceding claims, **characterized in that** that portion of the particles that includes a fusible polymer is selected such that the particles retain their original flowability after storage at 150°C under a nitrogen atmosphere for 8 hours.

14. A thermoplastic pulverulent composition comprising pulverulent thermoplastic polyurethane, wherein the thermoplastic polyurethane is obtainable from the reaction of the following components:
a) at least one organic diisocyanate,
b) at least one compound having groups reactive toward isocyanate groups and having a number-average molecular weight (Mn) of 500 g/mol to 6000 g/mol and a number-average functionality of the sum total of the components b) of 1.8 to 2.5,
c) at least one chain extender having a molecular weight (Mn) of 60 to 450 g/mol and a number-average functionality of the sum total of the chain extenders c) of 1.8 to 2.5,
in the presence of
d) optionally catalysts,
e) optionally auxiliaries and/or additives,
f) optionally one or more chain terminators,
**characterized in that** the thermoplastic polyurethane has a melting range (DSC, differential scanning calorimetry; second heating run at heating rate 5 K/min) of 160 to 270°C and a Shore D hardness to DIN ISO 7619-1 of 50 or more and which has a melt volume flow rate (MVR) at a temperature T to ISO 1133 of 5 to 15 cm³/10 min and a change in MVR in the event of an increase in this temperature T by 20°C of ≥ 90 cm³/10 min,
for production of articles in powder-based additive manufacturing methods, especially the method as claimed in any of claims 1 to 13.

15. An article produced by a method as claimed in any of claims 1 to 13 or with the aid of the composition as claimed in claim 14.

## Revendications

1. Procédé de préparation d'un objet, comprenant les étapes :
- application d'une couche de particules sur une surface cible ;
- action d'énergie sur une partie choisie de la couche, correspondant à une section transversale de l'objet, dans un compartiment, de sorte que les particules soient liées dans la partie choisie ;
- répétition des étapes d'application et d'action d'énergie pour une pluralité de couches, de sorte que les parties liées des couches adjacentes se lient afin de former l'objet ;
au moins une partie des particules présentant un polymère fusible ;
**caractérisé en ce que**
le polymère fusible comprend un polymère de type polyuréthane thermoplastique,
qui présente une plage de fusion (DSC, calorimétrie différentielle à balayage - Differential Scanning Calorimetry ; deuxième chauffage avec une vitesse de chauffage de 20 K/min) de 160 à 270 °C et
une dureté Shore D selon la norme DIN ISO 7619-1 de 50 ou plus et
qui présente un débit volumique à l'état fondu (melt volume rate (MVR)) à la température T selon la norme ISO 1133 de 5 à 15 cm³/10 min et
un changement du MVR lors d'une élévation de cette température T de 20 °C de > 90 cm³/10 min.

2. Procédé selon la revendication 1, **caractérisé en ce que** l'action d'énergie sur une partie choisie de la couche, correspondant à une section transversale de l'objet, de sorte que les particules soient liées dans la partie choisie, comprend l'étape suivante :
- irradiation d'une partie choisie de la couche, correspondant à une section transversale de l'objet, avec un faisceau d'énergie, de sorte que les particules soient liées dans la partie choisie.

3. Procédé selon la revendication 1, **caractérisé en ce que** l'action d'énergie sur une partie choisie de la couche, correspondant à une section transversale de l'objet, de sorte que les particules soient liées dans la partie choisie, comprend les étapes suivantes :
- application d'un liquide sur une partie choisie de la couche, correspondant à une section transversale de l'objet, le liquide augmentant l'absorption d'énergie dans les zones de la couche entrant en contact avec celui-ci par rapport aux zones n'entrant pas en contact avec celui-ci ;
- irradiation de la couche, de sorte que les particules soient liées les unes avec les autres dans les zones de la couche entrant en contact avec le liquide et que les particules ne soient pas liées ensemble dans les zones de la couche n'entrant pas en contact avec le liquide.

4. Procédé selon l'une quelconque des revendications précédentes, **caractérisé en ce que** les particules appliquées sont au moins temporairement chauffées ou refroidies.

5. Procédé selon l'une quelconque des revendications précédentes, **caractérisé en ce que** le polymère de type polyuréthane thermoplastique présente une dureté Shore (norme DIN ISO 7619-1) de ≥ 50 Shore D à ≤ 85 Shore D.

6. Procédé selon l'une quelconque des revendications précédentes, **caractérisé en ce que** le polymère fusible comprend, outre le polymère de type polyuréthane, un polymère supplémentaire qui est choisi dans le groupe constitué par un polyester, un ABS, un polycarbonate ou une combinaison d'au moins deux de ceux-ci.

7. Procédé selon la revendication 6, **caractérisé en ce que** le polymère fusible est un mélange comprenant le polymère de type polyuréthane et un ABS, le polymère de type polyuréthane présentant un point de fusion (DSC, calorimétrie différentielle à balayage - Differential Scanning Calorimetry ; deuxième chauffage avec une vitesse de chauffage de 20 K/min) de ≥ 160 °C et la proportion de l'ABS dans le mélange étant ≥ 1 % en poids à ≤ 40 % en poids, par rapport au poids total du mélange.

8. Procédé selon la revendication 6, **caractérisé en ce que** le polymère fusible est un mélange comprenant le polymère de type polyuréthane et un polyester, le polymère de type polyuréthane présentant un point de fusion (DSC, calorimétrie différentielle à balayage - Differential Scanning Calorimetry ; deuxième chauffage avec une vitesse de chauffage de 20 K/min) de ≥ 160 °C et la proportion du polyester dans le mélange étant ≥ 1 % en poids à ≤ 40 % en poids, par rapport au poids total du mélange.

9. Procédé selon la revendication 6, **caractérisé en ce que** le polymère fusible est un mélange comprenant le polymère de type polyuréthane et un polycarbonate à base de bisphénol A et/ou de bisphénol TMC, le polymère de type polyuréthane présentant un point de fusion (DSC, calorimétrie différentielle à balayage - Differential Scanning Calorimetry ; deuxième chauffage avec une vitesse de chauffage de 20 K/min) de ≥ 160 °C et la proportion du polycarbonate dans le mélange étant ≥ 1 % en poids à ≤ 40 % en poids, par rapport au poids total du mélange.

10. Procédé selon l'une quelconque des revendications précédentes, **caractérisé en ce qu'**au moins une partie des particules présente le polymère fusible ainsi qu'un polymère supplémentaire et/ou des particules inorganiques.

11. Procédé selon l'une quelconque des revendications précédentes, **caractérisé en ce que** l'objet formé est soumis à un post-traitement qui est choisi dans le groupe constitué par : lissage mécanique de la surface, chauffage local ciblé, chauffage de l'objet entier, refroidissement local ciblé, refroidissement de l'objet entier, mise en contact de l'objet avec de la vapeur d'eau, mise en contact de l'objet avec la vapeur d'un solvant organique, irradiation de l'objet avec un rayonnement électromagnétique, immersion de l'objet dans un bain de liquide ou une combinaison d'au moins deux de ceux-ci.

12. Procédé selon l'une quelconque des revendications précédentes, **caractérisé en ce que** les particules, après l'étape d'application d'une couche des particules sur la surface cible, sont mises en suspension au moins partiellement dans une phase liquide.

13. Procédé selon l'une quelconque des revendications précédentes, **caractérisé en ce que** la partie des particules, qui présentent un polymère fusible, est choisie de telle manière que les particules conservent leur aptitude à l'écoulement d'origine après un stockage à 150 °C pendant 8 heures dans une atmosphère d'azote.

14. Agent pulvérulent thermoplastique contenant un polyuréthane thermoplastique pulvérulent, le polyuréthane thermoplastique pouvant être obtenu par la réaction des composants suivants
a) au moins un diisocyanate organique,
b) au moins un composé présentant des groupes réactifs vis-à-vis de groupes isocyanate, doté d'un poids moléculaire moyen en nombre (Mn) de 500 g/mole à 6 000 g/mole et d'une fonctionnalité moyenne en nombre de la totalité des composants en b) de 1,8 à 2,5,
c) au moins un agent d'extension de chaînes doté d'un poids moléculaire (Mn) de 60 à 450 g/mole et d'une fonctionnalité moyenne en nombre de la totalité des agents d'extension de chaîne en c) de 1,8 à 2,5, en présence
d) éventuellement de catalyseurs,
e) éventuellement d'auxiliaires et/ou d'additifs,
f) éventuellement d'un ou plusieurs agents de terminaison de chaînes, **caractérisé en ce que** le polyuréthane thermoplastique présente une plage de fusion (DSC, calorimétrie différentielle à balayage - Differential Scanning Calorimetry ; deuxième chauffage avec une vitesse de chauffage de 5 K/min) de 160 à 270 °C et une dureté Shore D selon la norme DIN ISO 7619-1 de 50 ou plus et présente un débit volumique à l'état fondu (melt volume rate (MVR)) à une température T selon la norme ISO 1133 de 5 à 15 cm³/10 min et un changement du MVR lors d'une élévation de cette température T de 20 °C de > 90 cm³/10 min,
pour la préparation d'objets dans des procédés de fabrication additive à base de poudre, en particulier dans le procédé selon l'une quelconque des revendications 1 à 13.

15. Objet, préparé par un procédé selon l'une quelconque des revendications 1 à 13 ou à l'aide de l'agent selon la revendication 14.
